(19)

Europäisches
Patentamt
European
Patent Office
Office européen
des brevets

(11)     **EP 3 091 057 B1**

(12)     **EUROPEAN PATENT SPECIFICATION**

(45) Date of publication and mention
of the grant of the patent:
**09.09.2020   Bulletin 2020/37**

(51) Int Cl.:
*C09D 123/08* (2006.01)        *C08L 23/08* (2006.01)
*C08J 5/18* (2006.01)

(21) Application number: **15166779.7**

(22) Date of filing: **07.05.2015**

(54) **POLYMER COMPOSITIONS FOR EXTRUSION COATING**

POLYMERZUSAMMENSETZUNGEN FÜR EXTRUSIONSBESCHICHTUNG

COMPOSITIONS POLYMÈRES POUR REVÊTEMENT PAR EXTRUSION

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR** | • **Peltovuori, Mikko<br>48400 Kotka (FI)** |
| | (74) Representative: **Lux, Berthold<br>Maiwald Patentanwalts- und<br>Rechtsanwaltsgesellschaft mbH<br>Elisenhof<br>Elisenstraße 3<br>80335 München (DE)** |
| (43) Date of publication of application:<br>**09.11.2016   Bulletin 2016/45** | |
| (73) Proprietor: **Borealis AG<br>1220 Vienna (AT)** | (56) References cited:<br>**WO-A1-2005/019333     WO-A1-2013/079654** |
| (72) Inventors:<br>• **Nummila-Pakarinen, Auli<br>06100 Porvoo (FI)** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to polymer compositions having improved processing and sealing properties. Especially the present invention deals with polyethylene compositions to be used in extrusion coating. Further, the invention relates to extrusion coated articles, and preparation thereof, which articles comprise a substrate layer and at least one film layer of said polyethylene composition having good processability in extrusion coating process and improved sealing properties, like hot-tack performance.

Laminates and single or multi-layer films are packaging materials that often employ heat-sealable layer(s). Laminates are often made by coating a substrate, like a fibrous substrate, such as paper, paperboard or Kraft paper or woven or non-woven fabrics; a metal foil, such as aluminium foil or a plastic film, such as an oriented polypropylene film, PET film, PA film or cellophane film, metallised film or combinations thereof with a heat-sealable layer by extrusion coating. A heat-sealable layer in such articles makes it possible to seal the material to form structures such as bags or other packages and lidding materials. In order to facilitate sealing, the heat-sealable film is usually employed singly or as the outermost and/or innermost layer in the case of multi-layer structures. As additional layers can be used fibrous, polymeric, metallic or any material needed for producing desired structure and properties.

In preparing an extrusion coated article the polymer is extruded onto the moving substrate through a flat die. When the melt exits the die the melt film is pulled down into a nip formed between two rollers, the pressure roll and the chill roll, situated below the die. The substrate, moving at a velocity which is higher than that of the melt film, draws the film to the required thickness. The pressure between the two rolls forces the film onto the substrate. Further, the film is cooled and solidified by the low temperature of the chill roll. The draw ratio, which is one of the characteristic parameters of the extrusion coating process, is the ratio of the die gap to the thickness of the polymer film on the substrate.

In a typical extrusion coating process the substrate is passed at a high velocity, typically more than 100 m/min. Modern machines are designed to operate at lines speeds of up to 1000 m/min. In the instant application "line speed" and "draw-down speed" are considered as synonyms denoting the speed of the substrate in the coating line.

Description of extrusion coating process is given, for instance, in Crystalline Olefin Polymers, Part II, by R.A.V. Raff and K.W. Doak (Interscience Publishers, 1964), pages 478 to 484, or in Vieweg, Schley and Schwarz: Kunststoff Handbuch, Band IV, Polyolefine, Carl Hanser Verlag (1969), 20, pages 412 to 420.

Many definitions are used to define the processability properties of the polymer compositions in extrusion coating process. In extrusion coating process when the molten polymer is drawn from the die at high speed into the nip, the thickness of the polymer is reduced dramatically. The relation between the thickness of the die opening and the final coating weight is called "draw ratio". Draw resonance describes the thickness variation of the polymer web in the machine direction as well in the transverse direction caused by inhomogeneous instable response of the melt film when drawn down. Draw-down measures the capability of the polymer to stand high speed without breaking. Signs of poor processability are instabilities in web edges (edge weaving) and in coating weight (pumping, draw resonance). Edge tear or web breaks indicate limitations in draw-down speed. Instead good processability means web stability at high draw-down speeds and ratios resulting in even coating weight over the whole web. Due to the internal stress in the polymers, the effective coating width is always narrower than the actual die slot width. This difference is called neck-in. Low neck-in is desired. High line speed used in extrusion coating process sets heavy requirements for the material.

In order to get high quality extrusion coating material and extrusion coated articles made thereof not only the processability properties should be an a good level but also the final polymer and material should have desired properties. Essential features in many extrusion coating materials are good sealing properties, especially hot-tack properties and low seal initiation temperature. Melting point of the polymer is an essential feature as regards sealing performance.

Low density polyethylene (LDPE) is a resin commonly used in extrusion coating because of the ease in processing. However, some other properties of the material are not always satisfactory for desired applications. E.g. barrier and organoleptic properties might not fulfill all desired requirements. Further, especially there is need to improve the sealing properties, like hot-tack properties compared to LDPE extrusion coating materials.

Some examples of extrusion coating process and extrusion coated articles are disclosed e.g. in EP1777238, WO2000/78859 and WO2013/124221, all based on polyethylene compositions.

Thus, even though LDPE as such is a useful material in many extrusion coating applications, there is a need to improve the properties based on LDPE, especially the sealing properties thereof. Even though processability of LDPE is at least on a reasonable good level, increase in throughput of the material is also desired.

Sealing properties are typically defined by measuring hot-tack properties and heat sealing temperature range as defined later.

However, the hot-tack properties, i.e. the properties of the seal at temperatures subsequent to formation while the seal is still warm are important indicators of seal performance in high speed packaging lines.

There are a number of different hot tack properties that are important for heat sealable films. One important hot tack property is the "seal initiation temperature." The seal initiation temperature is the first temperature above ambient at which a seal can be formed by applying a given pressure to a given thickness of film for a given length of time. In general, lower initiation temperatures are desired because less energy is required to be used to form the seal and also it takes less time for the initial seal to form at a given seal jaw temperature. Thus, production rates are capable of being increased.

Another important hot tack property is ultimate hot tack, or maximum hot-tack, which terms have in the present application the same meaning. Maximum hot tack is the largest strength the seal has at temperatures above the initiation temperature. Usually it is desirable that the maximum hot tack occurs at the lowest possible temperature.

Further, an additional hot tack property that is generally desired is a wide processing window such that the film exhibits desired seal strength as measured over a broad temperature range.

It is also desired a high temperature hot tack such that the seal strength remains sufficient even at elevated temperatures.

As disclosed above, LDPE compositions, which have been widely used in extrusion coating field, have hot tack properties, which are not satisfactory for many applications.

It is known that the low density ethylene polymer can be blended with other polymers. Especially advantageously, the low density ethylene polymer is blended with olefin polymers produced by polymerising olefins in the presence of transition metal polymerisation catalysts. Examples of such polymers are homo- and copolymers of ethylene, homo- and copolymers of propylene and homo- and copolymers of 1-butene. Further, blending LDPE with e.g. plastomers is as such known. WO 2005/019333 A1 and WO 2013/079654 A1 disclose blends of LLDPE ethylene-hexene copolymers and LDPE. Drawback in using plastomers in extrusion coating applications has been that the processability of plastomers causes problems in extrusion coating process and limits the production capacity. However, finding compositions, where benefits of plastomers could be combined with properties of LDPE would be highly appreciated.

Thus, it would be highly desired to provide new composition having a combination of good sealing properties, especially good hot-tack properties and having good processability performance in extrusion coating process.

Further, it would be highly desired to provide an extrusion coated article, like laminate, comprising a substrate layer, at least one layer having good sealing properties, especially good hot-tack properties. Further, a broader sealing window is an additional beneficial feature.

Still, it is especially desired to have an extrusion coated article comprising a substrate layer and a polymer layer structure having good sealing properties as defined above and having good processability properties.

## Summary of the invention

It has now been surprisingly found that a combination of good processability and good sealing properties for extrusion coating process and extrusion coated articles can be achieved by providing a tailored composition comprising a specific low density polyethylene and a specific plastomer for extrusion coating process. Thus, the present invention relates to a polymer composition comprising a specific low density polyethylene and a specific plastomer. The present invention provides a polymer composition according to claim 1. Further details of the composition are described later in the present application.

A further object of the invention is the use of the polymer composition comprising specific low density polyethylene and a specific plastomer in extrusion coating processes comprising coating a substrate with a layer of said composition. The present invention provides a use according to claim 14.

Further, the present invention relates to an extrusion coated article comprising at least a substrate layer and at least one layer of the composition comprising specific low density polyethylene and specific plastomer. The present invention provides an extrusion coated article according to claim 9. The article can comprise additional layers as well.

The present invention relates also to the process for producing an extrusion coated article. The present invention provides a process according to claim 13.

## Detailed description of the invention

It has been found that providing a tailored composition of specific low density polyethylene with a specific plastomer the sealability measured by hot-tack properties of the polymer can be improved and still the composition has good processability properties for use in an extrusion coating process.

Low density ethylene polymers contain long chain branches and are thus different from linear copolymers of ethylene and alpha-olefin comonomers produced in the presence of a Ziegler or a metallocene catalyst. Especially, the presence of said long chain branches causes clear differences in the rheological behaviour of the polymer.

Plastomers are generally defined as a polymer material which combines qualities of elastomers and plastics, such as rubber-like properties with the processing ability of plastic. Plastomers used in the present invention are ethylene-alpha olefin copolymers.

Thus, the present invention relates to a new polymer composition (A) for extrusion coating comprising

a) 10 to 60 wt-% of low density polyethylene
b) 90 to 40 wt-% of a plastomer
wherein

a) is a low density polyethylene having

- melt flow rate (MFR$_2$), measured according to ISO1133 (190 °C, 2,16 kg load) of 2,5 to 10 kg/10min,
- a density 920 kg/m$^3$ or less,

b) is a plastomer of ethylene-octene copolymer and having a density of 880 to 915 kg/m3, and

where the amounts of a) and b) are based on the total weight of the composition (A).

Further, the present invention relates to an extrusion coated article comprising

1) a support layer (S) and
2) at least one heat sealable layer (H) of a polymer composition (A) comprising

a) 10 to 60 wt-% of low density polyethylene
b) 90 to 40 wt-% of a plastomer

wherein

a) the low density polyethylene has

- a melt flow rate (MFR$_2$), measured according to ISO1133 /190 °C, 2,16 kg load) of 2,5 to 10 kg/10min,
- a density of 920 kg/m$^3$ or less,

b) the plastomer is an ethylene-octene copolymer and having a density of 880 to 915 kg/m3, and

where the amounts of a) and b) are based on the total weight of the composition (A).

Extrusion coated article can comprise in addition to the substrate layer (S) and at least one heat sealable layer (H) of polymer composition (A) one or more additional layers (L).

Further, the present invention relates to a process for producing extrusion coated articles by extrusion coating a substrate layer (S) by extruding at least one layer of the polymer composition (A) in a molten state through a flat die onto said substrate. The layer of the polymer composition (A) forms a heat sealable polymer layer (H) of the extrusion coated article.

In addition the invention relates to the use of the composition (A) as heat sealable layer (H) in extrusion coating article.

More details and preferred embodiments of the present invention are disclosed in this specification and in the claims.

The extrusion coated articles can comprise in addition to the substrate layer (S) and at least one heat sealable layer (H) of the polymer composition (A) one or more additional layers (L), provided that the layer of the polymer composition (A), i.e. the heat sealable layer (H), forms always a surface layer of the extrusion coated article. The heat sealable layer can be located on one or both surfaces of the extrusion coated article. Such optional layers (L) can be of any material suitable to be used in an extrusion coated article, like any polymeric layer, metal foil, metallised polymeric layer, fibrous material or combinations thereof. Layers (L) can be used for many purposes, like as adhesive layers, being typically of polymeric materials, tie layers, barrier layers or structural layers.

Thus, according to one embodiment the present invention relates to an extrusion coated article comprising

1. a substrate layer (S)
2. at least one heat sealable layer (H) of the polymer composition (A) as defined above and
3. at least one additional layer (L)

provided that the heat sealable layer (H) of the polymer composition (A) is located on at least one surface of the extrusion coated article.

Substrate layer (S)

In the articles of the present invention the substrate layer (S) may comprise at least one layer of, among others, fibrous substrates, like paper, paperboard or Kraft paper or woven or non-woven fabrics, woven plastic, a plastic film, such as an oriented polypropylene film, PET film, PA film or cellophane film or a metal foil. In preferred embodiments the substrate layer (S) is selected from paper, paperboard or Kraft paper, plastic film being a biaxially oriented polypropylene film, oriented PET film, oriented PA film, metallised biaxially oriented polypropylene film, woven fabric or plastic, and metal foil being an aluminium foil.

Ethylene Polymers

Ethylene polymer used in the composition (A) of the present invention is a low density ethylene polymer (LDPE). Low density ethylene polymers contain long chain branches and are thus different from linear copolymers of ethylene and alpha-olefin comonomers produced in the presence of a Ziegler or a metallocene catalyst. Especially, the presence of the long chain branches causes clear differences in the rheological behaviour of the polymer.
The meaning of low density polyethylene (LDPE) is well known and documented in the literature. Although the term LDPE is an abbreviation for low density polyethylene, the term is understood not to limit the density range, but covers the high pressure polyethylenes (HP polyethylene) with low, medium and higher densities produced by radical polymerization process using free radical initiators. Autoclave and tubular reactors are typically used in HP ethylene polymerization process. The term LDPE describes and distinguishes only the nature of HP polyethylene with typical features, such as different branching architecture, compared to the polyethylene produced in the presence of an olefin polymerization catalyst. Moreover, said low density polyethylene (LDPE), preferably the low density polyethylene (LDPE) homopolymer, may be unsaturated.
In case the low density polyethylene (LDPE) is a copolymer, it comprises comonomers, typically selected from, but not restricted to, acrylates, acrylic acids, methacrylates, methacrylic acids and acetates.
Low density polyethylenes (LDPE) consist of chain molecules of many different lengths causing distribution of molecular length or molecular weight (MWD). MWD is the ratio of weight average molecular weight (Mw) and number average molecular weight (Mn), thus MWD is Mw/Mn. Polyethylenes used in the present invention can be unimodal or multimodal as re to the form of its molecular weight distribution (MWD) curve, i.e. the appearance of the graph of the polymer weight fraction as a function of its molecular weight. If the polymer is produced in the sequential step process, i.e. by utilizing reactors coupled in series, and using different conditions in each reactor, the different polymer fractions produced in the different reactors each have their own molecular weight distribution which may considerably differ from one another and as a result a bi- or multimodal polymer is produced. Unimodal polymers have no such bi- or multimodal appearance of molecular weight maximums. Low density polyethylenes to be used in extrusion coating applications have broad MWD due to the branched structure of the polymers.
LDPE used in the compositions (A) of the present invention is preferably produced in autoclave reactors as described in EP1777283 of Borealis.
The density of the LDPE used in the present invention is at most 920 kg/m$^3$, preferably 918 kg/m$^3$ or less, more preferably 917 kg/m$^3$ or less. The lower limit of the density is not crucial, but can be defined to be 910 kg/m$^3$. Thus, the density can be defined to be in the range of 910 to 920 kg/m$^3$, preferably in the range of 912 to 918 kg/m$^3$.
Melt index (or melt flow rate) MFR$_2$, measured according to ISO1133, 190 °C/2,16 kg load, of the LDPE suitable for the present invention is of from 2.5 to 10 g/10 min, preferably from 2.5 to 8,0 g/10 min and in particular from 3,5 to 6,5 g/10 min.
In one preferred embodiment the MFR$_2$ is in the range of 3,5 to 6,5 g/10 min and the density is 918 kg/m$^3$ or less.
LDPE used in the compositions (A) of the present invention can further be defined by the rheological properties thereof.
Thus, in a preferred embodiment in addition to the defined MFR$_2$ and density values, the LDPE used in the present invention has a dynamic viscosity at a shear rate of 0.05 rad/s ($\eta_{0.05}$), and a dynamic viscosity at a shear rate of 300 rad/s ($\eta_{300}$), which satisfy the following relationship:

$$\eta_{300} \leq 108 + 0.0253 \cdot \eta_{0.05}.$$

According to a second preferred embodiment of the present invention the LDPE used in the present invention has in addition to the density and MFR$_2$ as defined above, tan $\delta_{0.5}$, the value of the tangent of the phase shift at a frequency of 0.5 rad/s, and tan $\delta_{300}$, the value of the tangent of the phase shift at a frequency of 300 rad/s, which satisfy the following relationship:

$$\tan \delta_{300} \geq 0.45 + 0.164 \cdot \tan \delta_{0.5}$$

According to a third embodiment of the present invention the LDPE used in the present invention has the density and $MFR_2$ as defined above, and the dynamic viscosity at a shear rate of 0.05 rad/s ($\eta_{0.05}$), and the dynamic viscosity at a shear rate of 300 rad/s ($\eta_{300}$), which satisfy the following relationship:

$$\eta_{300} \leq 108 + 0.0253 \cdot \eta_{0.05}$$

and
further $\tan \delta_{0.5}$, the value of the tangent of the phase shift at a frequency of 0.5 rad/s, and $\tan \delta_{300}$, the value of the tangent of the phase shift at a frequency of 300 rad/s, satisfy the following relationship:

$$\tan \delta_{300} \geq 0.45 + 0.164 \cdot \tan \delta_{0.5}$$

While it is not entirely clear what is the cause of the relationships between $\eta_{0.05}$ and $\eta_{300}$ and $\tan \delta_{0.5}$ and $\tan \delta_{300}$, it is believed that the low density ethylene polymer used in the present invention has a higher content of long chain branches per 1000 atoms in the polymer backbone than the traditional low density polyethylene of the prior art.
The following statements are applicable to all embodiments of the present invention.
Preferably, the low density ethylene polymer has a dynamic viscosity at a shear rate of 0.05 rad/s, $\eta_{0.05}$, of from 1000 to 10000 Pa·s, more preferably from 1500 to 7000 Pa·s and in particular from 2000 to 5000 Pa·s.
Further still, the low density ethylene polymer has a value of $\tan \delta_{0.5}$, the value of the tangent of the phase shift at a frequency of 0.5 rad/s of from 1.5 to 3.0, more preferably from 1.9 to 2.8, and a value of $\tan \delta_{300}$, the value of the tangent of the phase shift at a frequency of 300 rad/s of from 0.8 to 1.0, more preferably from 0.85 to 0.95.
Preferably still, the low density ethylene component has a shear thinning index $SHI_{1/100}$ of from 20 to 60, more preferably from 30 to 50.
It is also preferred that the low density ethylene polymer has a number average molecular weight, $M_n$, of from 8000 to 30000 g/mol, more preferably from 10000 to 25000. Also, it preferably has a weight average molecular weight, $M_w$, of from 400000 to 600000 g/mol, preferably from 470000 to 540000 g/mol. It is also preferred that it has a z-average molecular weight, $M_z$, of from 2000000 to 4000000 g/mol, more preferably from 2500000 to 3500000 g/mol. It also preferably has a molecular weight distribution, defined as a ratio of the weight average molecular weight to the number average molecular weight, $M_w/M_n$, of from 20 to 50, more preferably from 25 to 40.
Preferably, the low-density ethylene polymer used in the present invention, has a storage modulus G'(5 kPa), measured at a loss modulus G" of 5 kPa, within the range of 3000 to 3700 Pa, more preferably 3200 to 3600 Pa.

Plastomer

Plastomers used in the present invention are low-density ethylene-copolymers comprising ethylene polymers with octene comonomer.
Plastomers used in the present invention have low density, typically in the range of 880 to 915 $kg/m^3$, preferably 880 to 910 $kg/m^3$, and especially in the range of 882 to 908 $kg/m^3$.
$MFR_2$ (190 °C/2,16 kg) of the plastomers used in the present invention is in the range of 3 to 25 g/10min, preferably in the range of 5 to 20 g/10min.
Plastomers used in the present invention are preferably produced in a solution process in the presence of a metallocene catalyst.
In one preferred embodiment the plastomer has $MFR_2$ (190 °C/2.16kg) in the range of 5 to 20 kg/10 min and density in the range of 880 to 910 $kg/m^3$, especially in the range of 882 to 908 $kg/m^3$

Optional additional layers (L)

Layers (L) can be of any other material suitable to be used in an extrusion coated article, like any other polymeric layer, metal foil, fibrous material or combinations thereof. Layers (L) can comprise e.g. paper, paperboard or Kraft paper or woven or non-woven fabrics, a plastic film, such as low density polyethylene films, an oriented polypropylene film, like a biaxially oriented polypropylene film, metallised biaxially oriented polypropylene film, optionally oriented PET film, optionally oriented PA film or cellophane film or a metal foil being an aluminium foil.
Compositions can optionally be modified with other components to get desired properties.

A preferred polymer composition (A) of the present invention comprises

    a) 10 to 60 wt-% of low density polyethylene
    b) 90 to 40 wt-% of a plastomer

wherein

    a) the low density polyethylene has

    -    a melt flow rate ($MFR_2$), measured according to ISO1133 /190 °C, 2,16 kg load) of 3,5 to 6,5 kg/10min and
    -    a density 918 kg/m$^3$or less

    b) the plastomer is an ethylene-octene copolymer and having a density of 880 to 910 kg/m3,

where the amounts of a) and b) are based on the total weight of the composition (A).
An additional preferred polymer composition (A) of the present invention comprises

    a) 10 to 60 wt-% of low density polyethylene
    b) 90 to 40 wt-% of a plastomer

wherein

    a) the low density polyethylene has

    -    a melt flow rate ($MFR_2$), measured according to ISO1133 /190 °C, 2,16 kg load) of 2,5 to 10 kg/10min,
    -    a density 920 kg/m$^3$ or less, and
    -    a dynamic viscosity at a shear rate of 0.05 rad/s ($\eta_{0.05}$), and a dynamic viscosity at a shear rate of 300 rad/s ($\eta_{300}$), which satisfy the following relationship: $\eta_{300} \leq 108 + 0.0253 \cdot \eta_{0.05}$

    b) the plastomer is of ethylene.octene copolymer and having a density of 880 to 915 kg/m3,

where the amounts of a) and b) are based on the total weight of the composition (A).
In a further preferred embodiment of the present invention the polymer composition (A) comprises

    a) 10 to 60 wt-% of low density polyethylene
    b) 90 to 40 wt-% of a plastomer

wherein

    a) the low density polyethylene has

    -    a melt flow rate ($MFR_2$), measured according to ISO1133 /190 °C, 2,16 kg load) of 2,5 to 10 kg/10min,
    -    a density 920 kg/m$^3$ or less, and
    -    tan $\delta_{0.5}$, the value of the tangent of the phase shift at a frequency of 0.5 rad/s, and a tan $\delta_{300}$, the value of the tangent of the phase shift at a frequency of 300 rad/s, which satisfy the following relationship:
       tan $\delta_{300} \geq 0.45 + 0.164 \cdot$ tan $\delta_{0.5}$

    b) the plastomer is an ethylene-octene copolymer and having a density of 880 to 915 kg/m3,

where the amounts of a) and b) are based on the total weight of the composition (A).
According to a more preferred embodiment of the present invention the polymer composition (A) comprises

    a) 10 to 60 wt-% of low density polyethylene
    b) 90 to 40 wt-% of a plastomer

wherein

    a) the low density polyethylene has

- a melt flow rate (MFR$_2$), measured according to ISO1133 /190 °C, 2,16 kg load) of 2,5 to 10 kg/10min,

- a density 920 kg/m$^3$or less, and

- a dynamic viscosity at a shear rate of 0.05 rad/s ($\eta_{0.05}$), and a dynamic viscosity at a shear rate of 300 rad/s ($\eta_{300}$), which satisfy the following relationship:

$$\eta_{300} \leq 108 + 0.0253 \cdot \eta_{0.05}$$

and

- tan $\delta_{0.5}$, the value of the tangent of the phase shift at a frequency of 0.5 rad/s, and a tan $\delta_{300}$, the value of the tangent of the phase shift at a frequency of 300 rad/s, which satisfy the following relationship:

$$\tan \delta_{300} \geq 0.45 + 0.164 \cdot \tan \delta_{0.5}$$

b) the plastomer is an ethylene-octene copolymer and having a density of 880 to 915 kg/m3,

where the amounts of a) and b) are based on the total weight of the composition (A).

Further, the preferred values of a melt flow rate (MFR$_2$) of 3,5 to 6,5 kg/10min, and/or a density of 918 kg/m$^3$ or less of the low density polyethylene and/or the preferred density ranges of 880 to 910 kg/m$^3$ or 882 to 908 kg/m$^3$ of the plastomer can be combined with any of the preferred embodiments above. The plastomer is in all embodiments most preferably ethylene-octene copolymer.

All the preferred embodiments of the polymer composition (A) are applicable as preferred embodiments for the extrusion coated articles comprising the substrate layer (S), at least one layer of polymer composition (A) as a heat sealable layer (H) and optionally at least one additional layer (L).

The polymer compositions (A) of the present invention may be formed from the components (a) and (b) in any convenient manner, like using melt or dry blending. In the case of melt blending, all polymeric components of compositions (A) used in the present invention are melt compounded in compounding extruder, typically a twin-extruder. In dry blending the components are preferably blended at an extrusion coating line. Optionally, additional additives such as fillers, slip agents, anti-block agents, antioxidants, chill roll release agents and polymer process aid can be incorporated in the melt blends and dry blends.

The polymer composition (A) of the present invention is surprisingly well suitable for forming a heat sealable film having improved hot- tack properties and for use in extrusion coated articles. By using a film made of composition (A) as the only layer on a substrate or as an outer layer of a multilayer structure makes the extrusion coated articles very suitable for packaging materials, where good sealing properties, like good hot tack properties are required within a wide temperature range.

In addition to good sealing properties also very good processability is obtained, when a polymer composition layer (A) is used in the extrusion coating process.

As indicated above, heat sealing properties are among the main indexes used in evaluating the packaging materials. The heat seal properties include hot tack strengths and heat seal temperature range. Hot tack strength refers to the peel force of the sealing area when it is not yet completely cooled down.

The inventive composition (A) used as heat sealing layer in extrusion coated article, where kraft paper is used as substrate, has maximum hot-tack strength of more than 4 N, preferably at least 4,5 N, still more preferably at least 5 N. Maximum hot-tack strength is defined to be the maximum strength level along 20 °C interval of sealing range.

Other important features of sealing materials are SIT and SET values. The lowest sealing temperature (seal initiation temperature) (SIT) in the present invention, when as substrate layer is used kraft paper, is defined to be the temperature, where hot-tack strength is reaching 2 N and highest sealing temperature (SET) is the temperature, where hot-tack strength is still at 2 N.

Low SIT value and broad sealing window are especially important sealing properties in packaging industry, where line speed and process integrity are essential elements..

The extrusion coating process may be carried out using conventional extrusion coating techniques. Hence, at least the polymer composition (A) according to the present invention is fed, typically in the form of pellets, optionally containing additives, to an extruding device. From the extruder the polymer melt is passed preferably through a flat die to the substrate to be coated. The coated substrate is cooled on a chill roll, after which it is passed to edge trimmers and wound up. The die width typically depends on the size of the extruder used. Thus with 90 mm extruders the width may suitably be within the range of 600 to 1,200 mm, with 115 mm extruders from 900 to 2,500 mm, with 150 mm extruders from 1,000 to 4,000 mm and with 200 mm extruders from 3,000 to 5,000 mm. The line speed (draw-down speed) is preferably 75 m/min or more, more preferably at least 100 m/min, preferably at least 150 m/min. In most commercially operating machines the line speed is preferably more than 300 m/min or more than 500 m/min. Modern machines are designed to operate at lines speeds of up to 800 m(min, even up to 1,000 m/min, for instance 300 to 800 m/min. The temperature of the polymer melt is typically between 240 and 310 °C, like 250 t0 290 °C. The polymer composition (A) of the invention can be extruded onto the substrate as a monolayer coating or as an outer layer in co-extrusion. In a multilayer extrusion coating, the optional other layers may be coextruded. It is possible to further perform ozone and/or corona treatment in a known way, if desired or necessary.

The main end-uses for extrusion coated products obtained by using the polymer composition (A) according to the invention are in packaging applications, like liquid packaging for milk, juice, wine or other liquids, flexible packaging for snacks, confectionary, meat, cheese and medical products, rigid packaging like detergent cartons, cup and plate boards, but also for photographic paper or industrial applications like paper reel and ream wraps, and technical laminates.

The present invention, as outlined above, therefore also provides a substrate, respectively article which has at least one layer of excellent sealing properties being of polymer based composition (A) according to the invention on at least one surface.

Furthermore the present invention is also directed to the use of the inventive article as packaging and lidding material, in particular as a packaging and lidding material for food and/or medical products.

In some embodiments of the invention the extrusion coated article is subjected to different machining and forming operations in a downstream process. Such operations include, for instance, drilling, punching and bending.

The polymer layer of the extrusion coated substrate has preferably a thickness in the range of 5 to 1,000 μm, more preferably in the range of 5 to 100 μm, such as from about 7 to 50 μm. The specific thickness will be selected according to the nature of the substrate, its expected subsequent handling conditions and, most importantly, the subsequent use of the end product. The thickness of the substrate may generally be chosen freely and has no effect on the coating process. It can typically be from 1 to 1000 μm, e.g. 10 to 600 μm. The temperature of the polymer melt, i.e. of the composition melt, is typically between 240 to 330 °C, preferably from 250 to 310 °C.

It is also possible to employ a coating line with at least two extruders to make it possible to produce multilayered coatings with different polymers.

Thus, according to one embodiment of the invention the extrusion coated article is produced by

- extrusion coating a substrate (S) with a draw-down speed of at least 150 m/min by extruding at least one layer of polymer composition (A) in a molten state through a flat die onto said substrate at a melt temperature of from 240 to 310°C, preferably from 250 to 290°C, wherein the polymer composition (A) as defined above constitutes the heat sealable polymer layer.

It is also possible to have arrangements to treat the polymer melt exiting the die to improve adhesion, e.g. by ozone treatment, and/or the substrate with corona treatment or flame treatment. For the corona treatment, for instance the substrate is passed between two conductor elements serving as electrodes, with such a high voltage, usually an alternating voltage (about 10000 V and 10000 Hz), being applied between the electrodes that spray or corona discharges can occur. Due to the spray or corona discharge, the air above the substrate surface is ionized and reacts with the molecules of the substrate surface.

The extrusion coated articles, with compositions of this invention and preparation thereof are more fully described by the following examples. Unless indicated to the contrary, all parts and percentages are by weight.

## Examples

The following definitions of terms and determination methods apply for the above general description of the invention as well as to the below examples unless otherwise defined.

## Measuring methods:

### Molecular weight and molecular weight distribution

Mw, Mn and MWD are measured by Gel Permeation Chromatography (GPC) according to the following method: The weight average molecular weight Mw and the molecular weight distribution (MWD = Mw/Mn wherein Mn is the number average molecular weight and Mw is the weight average molecular weight) is measured according to ISO 16014-4:2003 and ASTM D 6474-99. A Waters GPCV2000 instrument, equipped with refractive index 10 detector and online viscometer was used with 2 x GMHXL-HT and 1x G7000HXL-HT TSK-gel columns from Tosoh Bioscience and 1,2,4-trichlorobenzene (TCB, stabilized with 250 mg/l 2,6-Di tert-butyl-4-methyl-phenol) as solvent at 140 °C and at a constant flow rate of 1 mL/min. 209.5 $\mu$L of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

Melt flow rate

Melt flow rate (or melt index) (MFR) was determined according to ISO 1133 at 190 °C. The load under which the measurement is conducted is given as a subscript. Thus, the MFR under the load of 2.16 kg is denoted as $MFR_2$. The melt flow rate $MFR_{21}$ is correspondingly determined at 190 °C under a load of 21.6 kg.

Density

Density of the polymer was determined according to ISO 1183-1987.

Melt temperature

The melt temperature Tm and crystallisation temperature $T_c$ were measured with a TA Instruments Q2000 differential scanning calorimetry device (DSC) according to ISO 11357/3 on 5 to 10 mg samples. Crystallisation and melt temperatures were obtained in a heat/cool/heat cycle with a scan rate of 10 °C/min between 30 °C and 180°C. Melt and crystallisation temperatures were taken as the peaks of the endotherms and exotherms in the cooling cycle and the second heating cycle respectively.

Dynamic viscosity and Shear thinning index

Dynamic rheological measurements were carried out with a rheometer, namely Rheometrics RDA-II, on compression moulded samples under nitrogen atmosphere at 190 °C using 25 mm diameter plates and plate and plate geometry with a 1.2 mm gap. The oscillatory shear experiments were done within the linear viscosity range of strain at frequencies from 0.05 to 300 rad/s (ISO 6721-1). Five measurement points per decade are made.

The values of storage modulus (G'), loss modulus (G") complex modulus (G*) and complex viscosity ($\eta$*) were obtained as a function of frequency ($\omega$). $\eta_{100}$ is used as abbreviation for the complex viscosity at the frequency of 100 rad/s.

Shear thinning index (SHI), which correlates with MWD and is independent of Mw, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.)

SHI value is obtained by calculating the complex viscosities $\eta$*(1 kPa) and $\eta$*(100 kPa) at a constant value of complex modulus of 1 kPa and 100 kPa, respectively. The shear thinning index SHI1/100 is defined as the ratio of the two viscosities $\eta$*(1 kPa) and $\eta$*(100 kPa), i.e. $\eta$(1)/$\eta$(100).

The definitions and measurement conditions are also described in detail on page 8, line 29 to page 11, line 25 of WO 00/22040.

It is usually not practical to measure the complex viscosity at the value of frequency of 0.05 rad/s directly. The value can be extrapolated by conducting the measurements down to the frequency of 0.126 rad/s, drawing the plot of complex viscosity vs. frequency, drawing a best-fitting line through the five points corresponding to the lowest values of frequency and reading the viscosity value from this line.

The phase shift $\delta$ indicates how much the dynamic response measured from the polymer is shifted with respect to the input signal. The phase shift is given in radians. The frequency which was used in the measurement is indicated as a subscript. Thus, $\delta_{0.5}$ indicates the phase shift measured at 0.5 rad/s frequency. Often the value of tan$\delta$, i.e. the tangent of the phase shift, is used instead of $\delta$.

Neck-in

Neck-in was determined as the difference between the width of the die and the width of the coating on the substrate.

Basis weight

Basis weight was determined as follows: Five samples were cut off from the extrusion coated paper parallel in the transverse direction of the line. The size of the samples was 100 cm$^2$. The paper was removed from the plastic. The samples were then weighed and the average was calculated. The result was given as a weight of the plastic per square meter.

Hot tack force

The maximum hot-tack force, i.e. the maximum of a force/temperature diagram is determined and reported.
Hot tack measurements were made with J&B hot tack tester following the method ASTM F 1921. The standard requires that the samples have to be cut into 15 mm slices in width. The samples are placed into the hot tack testing machine in vertical direction both ends attached to a mechanical lock. Then the tester seals and pulls out the hot seal and the resisting force is measured.
Sealing pressure, N/mm$^2$ 1.5
Sealing time, s 0.5
Cooling time, s 0.2
Peel speed, mm/s 200
Hot tack of each sample was established by testing hot tack forces with temperatures ranging from 80°C to a temperature where the measured hot tack force was below 1 N. The standard requires at least 3 parallel measurements to be done. The temperature was increased in steps of 5 °C.

SIT and SET

SIT and SET values are obtained from hot tack measurement. In the present invention the lowest sealing temperature (SIT) is defined to be the temperature (°C), where hot-tack strength is reaching 2 N, and highest sealing temperature (SET) is the temperature (°C), where hot-tack strength is still at 2 N.

Maximum hot-tack strength

Maximum hot-tack strength is defined to be the highest strength (N) level over 20 °C interval of sealing range.

**Layer materials for the extrusion coated article:**

Low density polyethylene (a)

Low density polyethylene (a) was produced in an autoclave reactor according to the procedure of example 1 of EP1777238.
LDPE had MFR$_2$ of 4,5 kg/10min and density 917 kg/m$^3$. It had further $\eta_{0.05}$ of 3690 Pa·s and $\eta_{300}$ of 180 Pa·s. The value of tan$\delta$ at frequencies of 0.5 and 300 rad/s was 2.3 and 0.88, respectively. G' (5kPa) was 3433Pa. It further had M$_n$ of 17500 g/mol, M$_w$ of 629000 g/mol and Mz of 3520000 g/mol. The polydispersity index, M$_w$/M$_n$ was thus 36.

Plastomer (b)

As plastomer was used ethylene-octene copolymer produced in solution process with metallocene catalyst and having density of 902 kg/m$^3$ and MFR$_2$ (190 °C/2,16 kg) of 10 g/10min.

Polymer Composition (A)

Composition (A) was formed by dry blending LDPE (a) as defined above with ethylene-octene plastomer (b) as defined above.
In A1 the weight-ratio LDPE (a)/Plastomer (b) was 20/80
In A2 the weight-ratio LDPE (a)/Plastomer (b) was 60/40

Low density polyethylene (C)

As a comparative LDPE resin was used commercial LDPE grade CA7230 of Borealis having density of 923 kg/m$^3$ and MFR$_2$ of 4,5 g/10min.

Heat sealable layer (H)

As a heat sealable layer was used polymers and polymer compositions as indicated in the inventive and comparative examples.

Substrate layer (S)

As a substrate layer (S) in the extrusion coated article was used in all examples UG Kraft paper with basis weight of 70 g/m$^2$.

Additional layer (L)

As an additional layer (L) between the substrate layer (S) and the heat sealable layer (H) was used in examples IE1, IE2 and CE2 the commercial low density polyethylene (C).
In the extrusion coated articles having the layer structure H-L-S, the basis weight of the heat sealable layer (H) was 10 g/m$^2$, the basis weight of layer (L) was 10 g/m$^2$ and the basis weight of the substrate layer (S) was 70 g/m$^2$.
In a layer structure H-S the basis weight of the layer H in the extrusion coated article was 30 g/m$^2$ or 10 g/m$^2$ as indicated in the examples.

**Inventive Example 1 (IE1)**

The polymer composition (A1) was used as a heat sealable layer in the inventive extrusion coated article with a layer structure (H-L-S).

**Inventive Example 2 (IE2)**

The polymer composition (A2) was used as a heat sealable layer in the inventive extrusion coated article with a layer structure (H-L-S).

**Inventive Example 3 (IE3)**

The polymer composition (A1) was used as a heat sealable layer in the inventive extrusion coated article with a layer structure (H-S) having the basis weight of the layer (H) 10 g/m$^2$.

**Inventive Example 4 (IE4)**

The polymer composition (A2) was used as a heat sealable layer in the inventive extrusion coated article with a layer structure (H-S) having the basis weight of the layer (H) 10 g/m$^2$.

**Comparative example 1 (CE1)**

As the heat sealable layer was used the same LDPE (a) as in inventive examples, but no plastomer was added to the composition. The layer structure was (H-S), having the basis weight of the layer (H) 30 g/m$^2$.

**Comparative example 2 (CE2)**

As the heat sealable layer was used only plastomer, i.e. no blend with LDPE. The layer structure was (H-L-S).

**Comparative example 3 (CE3)**

As the heat sealable layer was used a composition of LDPE (C) (20 wt-%) and plastomer (b) (80 wt-%). The layer structure was (H-S), having the basis weight of the layer (H) 10 g/m$^2$.

**Comparative example 4 (CE4)**

As the heat sealable layer was used a composition of LDPE (C) (60 wt-%) and plastomer (b) (40 wt-%). The layer structure was (H-S), having the basis weight of the layer (H) 10 g/m$^2$.

**12**

**Comparative example 5 (CE5)**

As the heat sealable layer was used only plastomer, i.e. no blend with LDPE. The layer structure was (H-S) having the basis weight of the layer (H) 10 g/m$^2$..

**Formation of Extrusion coated article:**

The extrusion coated articles composed of the same substrate layer (S) and polymer layers as indicated in IE1 to IE4 and CE1 to CE5. The articles were prepared according to the following method:
Extrusion coating runs were made on Beloit coextrusion coating line. It had Peter Cloeren's EBR die and a five layer feed block. The width of the line was 850 to 1,000 mm and the maximum possible line speed was 1,000 m/min. The line speed was maintained at 150 m/min.

In the EBR die (EBR stands for "edge bead reduction") two deckles, an upper and a lower deckle are adjusted to minimize the edge beads. The deckling is shown as the position of the deckles in mm from the starting, open, position. The first number indicates the position of the upper deckle and the second number the position of the lower deckle. For instance, deckling 70/30 means that the upper deckle has been moved to a position of 70 mm from the starting position and the lower deckle to 30 mm from the starting position.

In the coating line above a UG kraft paper was coated with layers as indicated in the examples. The temperature of the polymer melt was set to 290 °C and the extruders' temperature profile was 200-240-290-290 °C. The chill roll was matt and temperature of the cooling water was 15 °C. Used die opening was 0,65 mm and nip distance was 180 mm. Melt film touched the substrate for the first time +10 mm from nip to substrate side. Pressure of the pressure roll was 3.2kp/cm$^2$. The line speed was 150 m/min.

Ozone treatment for the melt (Wedeco) and Corona treatment for the substrate (Vetaphone) have been employed for all samples. Set point for ozone was 2.0 kW and thus concentration of ozone was 25 g/m$^3$. Applicator's distance and angle from molten film was 70 mm and 45°C Vetaphone ET5 corona treater had a output power of 12 kW and frequency of 18 to 35 kHz. It had an HF-amplifier with output voltage of 15 to 25 kV and multi-profile aluminium electrode. Set point for used corona was 12.0 kW.

Sealing properties of the extrusion coated articles of the inventive example IE1, IE2 and comparative examples CE1 and CE2 are disclosed in Table 1.

**TABLE 1.** Sealing properties of the extrusion coated articles

| Example | IE1 | IE2 | CE1 | CE2 |
|---|---|---|---|---|
| Max hot-tack strength/N | 5 | 4,5 | 2 | 5,5 |
| SIT/ °C | 93 | 100 | 110 | 90 |
| SET/°C | 175 | 170 | 130 | 165 |

As can be seen from the examples the inventive examples show improved maximum hot-tack strength and lower SIT compared to the composition without the plastomer (CE1). Also SET is on a clearly higher level. Sealing window is thus broadened when using the inventive compositions. In comparative example CE2 (only plastomer as the heat sealing layer) the SIT value is very low due to the very low melt temperature (Tm) of the plastomer. However, using a composition, where plastomer is the only polymeric component as a polymer layer is in processability point of view not possible, as is shown in Table 2 below.

Processability of polymer compositions can be evaluated measuring neck-in values, draw-down speed and melt temperatures (DSC) of polymer compositions used in examples as heat sealable layers. Draw-down speed was >500 m/min in all measured examples except in comparative example CE5 (only plastomer), where the process was not stable at all.

**TABLE 2.** Tm and neck-in

| Example | IE3 | IE4 | CE3 | CE4 | CE5 |
|---|---|---|---|---|---|
| LDPE(Type)/plastomer wt-ratio | 20(a)/80 | 60(a)/40 | 20(C)C/80 | 60(C)/40 | 0/100 |
| Tm (DSC)/°C of the composition | 100,3 | 103,8 | 103,4 | 107,4 | 97,3 |
| Neck-in/mm (in 200 m/min) | 108 | 65 | 163 | 88 | Not measurable |
| Draw-down/ m/min | >500 | >500 | >500 | >500 | Not stable |

Comparing neck-in values of IE3 and CE3, and neck-in values of IE4 and CE4, which have the same LDPE/Plastomer ratios in heat sealable layer, respectively, but using different LDPE grades, it can be seen that the neck-in is clearly lower in inventive examples than in corresponding comparative examples. Using only plastomer, the processability is almost impossible.

**Claims**

1. A polymer composition (A) for extrusion coating comprising

   a) 10 to 60 wt-% of low density polyethylene
   b) 90 to 40 wt-% of a plastomer

   wherein

   a) is a low density polyethylene having

   - a melt flow rate ($MFR_2$), measured according to ISO1133 (190 °C, 2,16 kg load) of 2,5 to 10 g/10min,
   - a density of 920 kg/m$^3$ or less,

   b) is a plastomer of ethylene-octene copolymer and having a density of 880 to 915 kg/m$^3$, and

   where the amounts of a) and b) are based on the total weight of the composition (A).

2. A polymer composition (A) according to claim 1, wherein the plastomer (b) has $MFR_2$, measured according to ISO1133 (190 °C, 2,16 kg load), in the range of 3 to 25 g/10 min, preferably 5 to 20 g/10 min.

3. A polymer composition (A) according to claim 1 or 2, wherein the plastomer (b) has a density of 880 to 910 kg/m$^3$.

4. A polymer composition (A) according to any of claims 1 to 3, wherein the plastomer (b) is produced in a solution process in the presence of a metallocene catalyst.

5. A polymer composition (A) according to any of claims 1 to 4, wherein the low density polyethylene (a) has

   - a melt flow rate ($MFR_2$), measured according to ISO1133 /190 °C, 2,16 kg load) of 2,5 to 10 g/10min,
   - a density 920 kg/m$^3$ or less, and
   - a dynamic viscosity at a shear rate of 0.05 rad/s ($\eta_{0.05}$), and a dynamic viscosity at a shear rate of 300 rad/s ($\eta_{300}$), which satisfy the following relationship:

$$\eta_{300} \leq 108 + 0.0253 \cdot \eta_{0.05}$$

6. A polymer composition (A) according to any of claims 1 to 4, wherein the low density polyethylene (a) has

   - a melt flow rate ($MFR_2$), measured according to ISO1133 /190 °C, 2,16 kg load) of 2,5 to 10 g/10min,
   - a density 920 kg/m$^3$ or less, and
   - tan $\delta_{0.5}$, the value of the tangent of the phase shift at a frequency of 0.5 rad/s, and tan $\delta_{300}$, the value of the tangent of the phase shift at a frequency of 300 rad/s, which satisfy the following relationship:

$$\tan \delta_{300} \geq 0.45 + 0.164 \cdot \tan \delta_{0.5}$$

7. A polymer composition (A) according to any of claims 1 to 4, wherein the low density polyethylene (a) has

   - a melt flow rate ($MFR_2$), measured according to ISO1133 /190 °C, 2,16 kg load) of 2,5 to 10 g/10min,
   - a density 920 kg/m$^3$ or less,
   - a dynamic viscosity at a shear rate of 0.05 rad/s ($\eta_{0.05}$), and a dynamic viscosity at a shear rate of 300 rad/s ($\eta_{300}$) which satisfy the following relationship:

$$\eta_{300} \le 108 + 0.0253 \cdot \eta_{0.05}$$

and

- tan $\delta_{0.5}$, the value of the tangent of the phase shift at a frequency of 0.5 rad/s, and a tan $\delta_{300}$, the value of the tangent of the phase shift at a frequency of 300 rad/s, which satisfy the following relationship:

$$\tan \delta_{300} \ge 0.45 + 0.164 \cdot \tan \delta_{0.5}.$$

8. A polymer composition (A) according to any of claims 1 to 7, wherein the low density polyethylene (a) has

   - a melt flow rate (MFR$_2$), measured according to ISO1133 /190 °C, 2,16 kg load) of 3,5 to 6,5 g/10min,
   - a density of 918 kg/m$^3$ or less.

9. An extrusion coated article comprising

   1. a substrate layer (S)
   2. at least one heat sealable polymer layer (H)

   wherein the polymer composition (A) as defined in any of the claims 1 to 8 constitutes the at least one heat sealable polymer layer (H), and provided that the heat sealable polymer layer (H) is located on at least one surface of the extrusion coated article.

10. An extrusion coated article according to claim 9, wherein the substrate layer (S) is selected from a group of paper, paperboard, kraft paper, a plastic film, metallised plastic film, a metal foil, woven fabric or plastic or combinations thereof.

11. An extrusion coated article according to claim 9 or 10, wherein the extrusion coated article comprises at least one additional layer (L).

12. An extrusion coated article according to any of claims 8 to 11, wherein the layer (L) comprises paper, paperboard or kraft paper or woven or non-woven fabrics, a plastic film, cellophane film or a metal foil being an aluminium foil.

13. Process for producing an extrusion coated article comprising

    - extrusion coating a substrate (S) with a draw-down speed of at least 150 m/min by extruding at least one layer of the polymer composition (A) as defined in any of claims 1 to 8 in a molten state through a flat die onto said substrate at a temperature of from 240 to 310 °C.

14. Use of a polymer composition (A) as defined in any of claims 1 to 8 as a heat sealable layer in an extrusion coated article.

**Patentansprüche**

1. Polymer-Zusammensetzung (A) zur Extrusionsbeschichtung, umfassend

   a) 10 bis 60 Gew.-% Polyethylen niedriger Dichte
   b) 90 bis 40 Gew.-% eines Plastomers,

   worin

   a) ein Polyethylen niedriger Dichte ist mit

      - einer Schmelze-Fließ-Rate (MFR$_2$), gemessen gemäß ISO 1133 (190°C, 2,16 kg Last), von 2,5 bis 10 g/10 min,
      - einer Dichte von 920 kg/m$^3$ oder weniger,

b) ein Plastomer aus Ethylen-Octen-Copolymer ist und eine Dichte von 880 bis 915 kg/m$^3$ aufweist, und

wobei die Mengen von a) und b) auf das Gesamtgewicht der Zusammensetzung (A) bezogen sind.

2. Polymer-Zusammensetzung (A) nach Anspruch 1, wobei das Plastomer (b) eine MFR$_2$, gemessen gemäß ISO 1133 (190°C, 2,16 kg Last), im Bereich von 3 bis 25 g/10 min, vorzugsweise 5 bis 20 g/10 min, aufweist.

3. Polymer-Zusammensetzung (A) nach Anspruch 1 oder 2, wobei das Plastomer (b) eine Dichte von 880 bis 910 kg/m$^3$ aufweist.

4. Polymer-Zusammensetzung (A) nach einem der Ansprüche 1 bis 3, wobei das Plastomer (b) in einem Lösungsverfahren in Gegenwart eines Metallocen-Katalysators hergestellt wird.

5. Polymer-Zusammensetzung (A) nach einem der Ansprüche 1 bis 4, wobei das Polyethylen niedriger Dichte (a) aufweist

- eine Schmelze-Fließ-Rate (MFR$_2$), gemessen gemäß ISO 1133 /190°C, 2,16 kg Last), von 2,5 bis 10 g/10 min,
- eine Dichte von 920 kg/m$^3$ oder weniger und
- eine dynamische Viskosität bei einer Scherrate von 0,05 rad/s ($\eta_{0,05}$), und eine dynamische Viskosität bei einer Scherrate von 300 rad/s ($\eta_{300}$), die die folgende Beziehung erfüllen:

$$\eta_{300} \leq 108 + 0{,}0253 \bullet \eta_{0,05}$$

6. Polymer-Zusammensetzung (A) nach einem der Ansprüche 1 bis 4, wobei das Polyethylen niedriger Dichte (a) aufweist

- eine Schmelze-Fließ-Rate (MFR$_2$), gemessen gemäß ISO 1133 /190°C, 2,16 kg Last), von 2,5 bis 10 g/10 min,
- eine Dichte von 920 kg/m$^3$ oder weniger und
- tan $\delta_{0,5}$, der Wert des Tangens der Phasenverschiebung bei einer Frequenz von 0,5 rad/s, und tan $\delta_{300}$, der Wert des Tangens der Phasenverschiebung bei einer Frequenz von 300 rad/s, die die folgende Beziehung erfüllen:

$$\tan\delta_{300} \geq 0{,}45 + 0{,}164 \bullet \tan\delta_{0,5}$$

7. Polymer-Zusammensetzung (A) nach einem der Ansprüche 1 bis 4, wobei das Polyethylen niedriger Dichte (a) aufweist

- eine Schmelze-Fließ-Rate (MFR$_2$), gemessen gemäß ISO 1133 /190°C, 2,16 kg Last), von 2,5 bis 10 g/10 min,
- eine Dichte von 920 kg/m$^3$ oder weniger,
- eine dynamische Viskosität bei einer Scherrate von 0,05 rad/s ($\eta_{0,05}$) und eine dynamische Viskosität bei einer Scherrate von 300 rad/s ($\eta_{300}$), die die folgende Beziehung erfüllen:

$$\eta_{300} \leq 108 + 0{,}0253 \bullet \eta_{0,05}$$

und
- tan $\delta_{0,5}$, der Wert des Tangens der Phasenverschiebung bei einer Frequenz von 0,5 rad/s, und einem tan $\delta_{300}$, der Wert des Tangens der Phasenverschiebung bei einer Frequenz von 300 rad/s, die die folgende Beziehung erfüllen:

$$\tan\delta_{300} \geq 0{,}45 + 0{,}164 \bullet \tan\delta_{0,5}$$

8. Polymer-Zusammensetzung (A) nach einem der Ansprüche 1 bis 7, wobei das Polyethylen niedriger Dichte (a) aufweist

- eine Schmelze-Fließ-Rate (MFR$_2$), gemessen gemäß ISO 1133 /190°C, 2,16 kg Last), von 3,5 bis 6,5 g/10 min,
- eine Dichte von 918 kg/m$^3$ oder weniger.

**9.** Extrusions-beschichteter Gegenstand, umfassend

1. eine Substratschicht (S)
2. mindestens eine heißsiegelfähige Polymerschicht (H),

wobei die Polymer-Zusammensetzung (A), wie in einem der Ansprüche 1 bis 8 definiert, die mindestens eine heißsiegelfähige Polymerschicht (H) bildet, und mit der Maßgabe, dass die heißsiegelfähige Polymerschicht (H) auf mindestens einer Oberfläche des Extrusions-beschichteten Gegenstands angeordnet ist.

**10.** Extrusions-beschichteter Gegenstand nach Anspruch 9, wobei die Substratschicht (S) aus einer Gruppe von Papier, Pappe, Kraftpapier, einem Kunststofffilm, metallisiertem Kunststofffilm, einer Metallfolie, einem Gewebe oder Kunststoff oder Kombinationen davon ausgewählt ist.

**11.** Extrusions-beschichteter Gegenstand nach Anspruch 9 oder 10, wobei der Extrusions-beschichtete Gegenstand mindestens eine zusätzliche Schicht (L) umfasst.

**12.** Extrusions-beschichteter Gegenstand nach einem der Ansprüche 8 bis 11, wobei die Schicht (L) Papier, Pappe oder Kraftpapier oder gewebte Stoffe oder Vlies-Stoffe, einen Kunststofffilm, Zellophanfilm oder eine Metallfolie, die eine Aluminiumfolie ist, umfasst.

**13.** Verfahren zur Herstellung eines Extrusions-beschichteten Gegenstandes, umfassend

- Extrusionsbeschichten eines Substrats (S) mit einer Abzugsgeschwindigkeit von mindestens 150 m/min durch Extrudieren mindestens einer Schicht der Polymer-Zusammensetzung (A), wie in einem der Ansprüche 1 bis 8 definiert, im geschmolzenen Zustand durch eine Flachdüse auf das Substrat bei einer Temperatur von 240 bis 310°C.

**14.** Verwendung einer Polymer-Zusammensetzung (A), wie in einem der Ansprüche 1 bis 8 definiert, als heißsiegelfähige Schicht in einem Extrusions-beschichteten Gegenstand.

## Revendications

**1.** Composition de polymère (A) pour revêtement par extrusion, comprenant

a) 10 à 60 % en poids de polyéthylène basse densité
b) 90 à 40 % en poids d'un plastomère

dans laquelle

a) est un polyéthylène basse densité ayant

- un indice de fluage (MFR$_2$), mesuré conformément à la norme ISO1133 (190°C, charge de kg), de 2,5 à 10 g/10 min,
- une masse volumique de 920 kg/m$^3$ ou moins,

b) est un plastomère de copolymère d'éthylène-octène et a une masse volumique de 880 à 915 kg/m$^3$, et

où les quantités de a) et b) sont basées sur le poids total de la composition (A).

**2.** Composition de polymère (A) selon la revendication 1, dans laquelle le plastomère (b) a un MFR$_2$, mesuré conformément à la norme ISO1133 (190°C, charge de kg), dans la plage de 3 à 25 g/10 min, de préférence de 5 à 20 g/10 min.

**3.** Composition de polymère (A) selon la revendication 1 ou 2, dans laquelle le plastomère (b) a une masse volumique de 880 à 910 kg/m$^3$.

4. Composition de polymère (A) selon l'une quelconque des revendications 1 à 3, dans laquelle le plastomère (b) est un produit dans un procédé en solution en présence d'un catalyseur métallocène.

5. Composition de polymère (A) selon l'une quelconque des revendications 1 à 4, dans laquelle le polyéthylène basse densité (a) a

   - un indice de fluage (MFR$_2$), mesuré conformément à la norme ISO1133 (190°C, charge de 2,16 kg), de 2,5 à 10 g/10 min,
   - une masse volumique de 920 kg/m$^3$ ou moins, et
   - une viscosité dynamique à une vitesse de cisaillement de 0,05 rad/s ($\eta_{0,05}$) et une viscosité dynamique à une vitesse de cisaillement de 300 rad/s ($\eta_{300}$) qui satisfont à la relation suivante :

$$\eta_{300} \leq 108 + 0,0253 \cdot \eta_{0,05}.$$

6. Composition de polymère (A) selon l'une quelconque des revendications 1 à 4, dans laquelle le polyéthylène basse densité (a) a

   - un indice de fluage (MFR$_2$), mesuré conformément à la norme ISO1133 (190°C, charge de 2,16 kg), de 2,5 à 10 g/10 min,
   - une masse volumique de 920 kg/m$^3$ ou moins, et
   - une tan $\delta_{0,5}$, qui est la valeur de la tangente du décalage de phases à une fréquence de 0,5 rad/s, et une tan $\delta_{300}$, qui est la valeur de la tangente du décalage de phases à une fréquence de 300 rad/s, qui satisfont à la relation suivante :

$$\tan \delta_{300} \geq 0,45 + 0,164 \cdot \tan \delta_{0,5}.$$

7. Composition de polymère (A) selon l'une quelconque des revendications 1 à 4, dans laquelle le polyéthylène basse densité (a) a

   - un indice de fluage (MFR$_2$), mesuré conformément à la norme ISO1133 (190°C, charge de 2,16 kg), de 2,5 à 10 g/10 min,
   - une masse volumique de 920 kg/m$^3$ ou moins,
   - une viscosité dynamique à une vitesse de cisaillement de 0,05 rad/s ($\eta_{0,05}$) et une viscosité dynamique à une vitesse de cisaillement de 300 rad/s ($\eta_{300}$) qui satisfont à la relation suivante :

$$\eta_{300} \leq 108 + 0,0253 \cdot \eta_{0,05}$$

   et
   - une tan $\delta_{0,5}$, qui est la valeur de la tangente du décalage de phases à une fréquence de 0,5 rad/s, et une tan $\delta_{300}$, qui est la valeur de la tangente du décalage de phases à une fréquence de 300 rad/s, qui satisfont à la relation suivante :

$$\tan \delta_{300} \geq 0,45 + 0,164 \cdot \tan \delta_{0,5}.$$

8. Composition de polymère (A) selon l'une quelconque des revendications 1 à 7, dans laquelle le polyéthylène basse densité (a) a

   - un indice de fluage (MFR$_2$), mesuré conformément à la norme ISO1133 (190°C, charge de 2,16 kg), de 3,5 à 6,5 g/10 min, et
   - une masse volumique de 918 kg/m$^3$ ou moins.

9. Article revêtu par extrusion comprenant

   1. une couche de substrat (S),

2. au moins une couche de polymère thermosoudable (H),

dans lequel la composition de polymère (A) telle que définie dans l'une quelconque des revendications 1 à 8 constitue l'au moins une couche de polymère thermosoudable (H), et sous réserve que la couche de polymère thermosoudable (H) soit située sur au moins une surface de l'article revêtu par extrusion.

10. Article revêtu par extrusion selon la revendication 9, dans lequel la couche de substrat (S) est choisie dans le groupe comprenant le papier, le carton, le papier kraft, un film plastique, un film plastique métallisé, une feuille métallique, une étoffe tissée et une matière plastique, ainsi que leurs combinaisons.

11. Article revêtu par extrusion selon la revendication 9 ou 10, dans lequel l'article revêtu par extrusion comprend au moins une couche additionnelle (L).

12. Article revêtu par extrusion selon l'une quelconque des revendications 8 à 11, dans lequel la couche (L) comprend du papier, du carton ou du papier kraft ou une étoffe tissée ou non tissée, un film plastique, un film de cellophane ou une feuille métallique qui est une feuille d'aluminium.

13. Procédé pour produire un article revêtu par extrusion, comprenant

- le revêtement par extrusion d'un substrat (S) à une vitesse d'étirage d'au moins 150 m/min par extrusion d'au moins une couche de la composition de polymère (A) telle que définie dans l'une quelconque des revendications 1 à 8 à l'état fondu au travers d'une filière plate sur ledit substrat à une température de 240 à 310°C.

14. Utilisation d'une composition de polymère (A) telle que définie dans l'une quelconque des revendications 1 à 8 en tant que couche thermosoudable dans un article revêtu par extrusion.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1777238 A
- WO 200078859 A
- WO 2013124221 A
- WO 2005019333 A1
- WO 2013079654 A1
- EP 1777283 A
- WO 0022040 A

### Non-patent literature cited in the description

- **R.A.V. RAFF ; K.W. DOAK.** Crystalline Olefin Polymers. Interscience Publishers, 1964, 478-484
- Polyolefine. **VIEWEG ; SCHLEY ; SCHWARZ.** Kunststoff Handbuch. Carl Hanser Verlag, 1969, vol. IV, 412-420
- Rheological characterization of polyethylene fractions. **HEINO, E.L. ; LEHTINEN, A. ; TANNER J. ; SEPPÄLÄ, J.** Theor. Appl. Rheol., Proc. Int. Congr. Rheol. Neste Oy, 1992, vol. 1, 360-362
- The influence of molecular structure on some rheological properties of polyethylene. **HEINO, E.L.** Annual Transactions of the Nordic Rheology Society. Borealis Polymers Oy, 1995